(19) **Europäisches Patentamt / European Patent Office / Office européen des brevets**

(11) **EP 4 198 158 A1**

(12) **EUROPEAN PATENT APPLICATION**
published in accordance with Art. 153(4) EPC

(43) Date of publication:
**21.06.2023 Bulletin 2023/25**

(21) Application number: **21849095.1**

(22) Date of filing: **07.06.2021**

(51) International Patent Classification (IPC):
*C22C 38/02* [(2006.01)]          *C22C 38/04* [(2006.01)]
*C22C 38/12* [(2006.01)]          *C21D 8/02* [(2006.01)]

(52) Cooperative Patent Classification (CPC):
**C22C 38/001; C21C 7/0006; C21C 7/0056;
C21C 7/064; C21C 7/10; C21D 8/0205;
C21D 8/0226; C21D 8/0263; C21D 9/0081;
C22C 38/002; C22C 38/02; C22C 38/04;
C22C 38/06; C22C 38/08; C22C 38/12;**          (Cont.)

(86) International application number:
**PCT/CN2021/098735**

(87) International publication number:
**WO 2022/022066 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2020   CN 202010826396**

(71) Applicants:
• **Laiwu Steel Yinshan Section Co., Ltd.
Ji'nan, Shandong 271104 (CN)**
• **Shandong Iron and Steel Company Ltd.
Jinan, Shangdong 271104 (CN)**

(72) Inventors:
• **MA, Heng
Shandong 271104 (CN)**

• **WANG, Zhongxue
Shandong 271104 (CN)**
• **WANG, Tengfei
Shandong 271104 (CN)**
• **WANG, Yuexiang
Shandong 271104 (CN)**
• **SUN, Zhengxu
Shandong 271104 (CN)**
• **ZHANG, Qingpu
Shandong 271104 (CN)**
• **HE, Kang
Shandong 271104 (CN)**
• **ZHANG, Pei
Shandong 271104 (CN)**
• **HUO, Xiaoxin
Shandong 271104 (CN)**

(74) Representative: **Global IP Europe
Patentanwaltskanzlei
Pfarrstraße 14
80538 München (DE)**

(54) **STEEL BOARD FOR POLAR MARINE ENGINEERING AND PREPARATION METHOD THEREFOR**

(57)     Disclosed are a steel board for polar marine engineering and a preparation method therefor. According to weight percentage, the components of the steel board are: C: 0.06-0.09%, Si: 0.20-0.35%, Mn: 1.48-1.63%, Nb: 0.020%-0.035%, Ti: 0.010%-0.020%, V: 0.020%-0.035%, Ni: 0.08%-0.17%, Als: 0.015%-0.040%, P: $\leq 0.013\%$ and S: $\leq 0.005\%$. The preparation method for the steel board comprises: pre-refining, refining and casting to obtain a cast billet, and the slowly cooling down same. The slowly cooled billet is heated and then rolled out to obtain the steel board; and the steel board is cooled down and ready. The steel has an excellent comprehensive performance in terms of having high strength and low temperature resistance, being easy to weld and corrosion proof, and the steel has good low-temperature aging impact toughness.

(52) Cooperative Patent Classification (CPC): (Cont.)
**C22C 38/14**

## Description

## Technical Field

The present invention pertains to the field of steel board for polar production technology, and in particular to a steel board for polar marine engineering and preparation method therefor.

## Background

With the increasing shortage of energy in the world, in the last century, Europe and the United States and other developed countries have increased the development of marine resources, and built a large number of marine platforms in the Gulf of Mexico and Northern Europe, which also promoted the development of steel for marine engineering. Marine platforms are used in severe marine working environments such as waves, tides, storms and extremely cold drift ice, supporting drilling equipment with a total weight of over hundreds of tons. These characteristics determines the use of marine platform steel must have high strength, high toughness, low temperature resistance, fatigue resistance, resistance to laminar tearing, good weldability and cold workability, and resistance to seawater corrosion and other performance indicators, which is important to ensure the safety of the operator's life, improve the service life of the marine platform steel and the development of marine resources. The Arctic, which is always in low temperature (the lowest temperature reaches minus 52 degrees Celsius), will require higher strength level of steel board for marine offshore engineering, and the strength of steel board in all thickness ranges should be consistent, which also makes the production of steel significantly more difficult. In the last century, the vast majority of China's marine engineering steel rely on imports, into the 21st century, with the rapid development of China's metallurgical industry, the following platform steel EH36 completely localized, but the key parts of the high performance steel board used is still mainly dependent on imports.

Although there are many patents on high-strength and low-temperature resistant marine engineering steel board, there are generally shortcomings such as high alloy content, complicated process and insufficient low-temperature toughness, etc. The following is a brief introduction of several similar patents:
Chinese patent application CN 102851611 B discloses "Ultra-high strength and toughness steel board for deep-water pressure casing and its manufacturing method", which involves the alloy composition of C, Si, Mn, P, S, Cr, Mo, Ni, Cu, Ti, Als, V, N, Ca elements in the steel board are required. The types and contents of alloying elements far exceed the content of this application, which will inevitably bring about an increase in its cost, and it is difficult to precisely control the composition in its steelmaking process. The steel production process is TMCP+QT, which is complicated and costly to produce.

Chinese patent application CN 103060715 B discloses "An ultra-high tensile steel board with low yield ratio and its manufacturing method", which involves the alloy composition of the steel board with the content of C, Si, Mn, P, S, Cr, Mo, Ni, Nb, Ti, Al, V, N, O, Ca, B elements are required. The types and contents of alloying elements far exceed the content of this application, which will inevitably bring about an increase in its cost, and it is difficult to precisely control the composition in its steelmaking process; The steel board production process is hot rolling + quenching + low temperature tempering, the process is complicated and the production cost is high; the steel board prepared by the patent has low post-break elongation and low temperature impact toughness, which cannot meet the service requirements in complex and extreme environments.

Chinese patent application CN 108728743 B discloses "steel with good low-temperature fracture toughness for marine engineering and its manufacturing method", which involves the steel board production process of hot rolling + twice quenching + low-temperature tempering, with a complex process and high heat treatment cost, which is not conducive to high-efficiency and low-cost batch industrial production, and Low-temperature aging impact toughness is insufficient.

Chinese patent application CN 104674117 A discloses "a 420 MPa grade marine engineering steel board and its manufacturing method", the alloy composition of the steel board involved in this patent requires the content of C, Si, Mn, P, S, Nb, Ti, Al, V and Cu elements are required, and the Cu added in this patent will lead to copper embrittlement, which leads to intergranular cracking during hot rolling. In addition, the content of other alloying elements in this application is not higher than that of this patent; although the steel board involved in this patent has good plasticity, the low temperature impact toughness is lower than that of this application, and the aging impact performance is not mentioned.

## SUMMARY

In view of the deficiencies and defects of the prior art, the present invention aims to provide a steel board for polar marine engineering and preparation method therefor. The steel grade has relatively low cost, good low-temperature toughness, simple process and easy operation, and has excellent comprehensive performance such as high strength, low-temperature resistance, easy welding and fatigue resistance, and good low-temperature aging impact toughness, thickness direction performance uniformity and batch-to-batch performance stability.

The technical solutions used in the present invention to solve technical problems are as follows:

A steel board for polar marine engineering, the components of the steel board in terms of mass percentage are: C: 0.06-0.09%, Si: 0.20-0.35%, Mn: 1.48-1.63%, Nb: 0.020%-0.035%, Ti: 0.010%-0.020%, V: 0.020%-0.035%, Ni: 0.08%-0.17%, Als: 0.015%-0.040%, P: ≤ 0.013%, S: & 0.005%, the rest are Fe and unavoidable impurities; and CEV & 0.39%, Pcm & 0.20%, wherein, $CEV=C+Mn/6+(Cr+Mo+V)/5+(Ni+Cu)/15$, $Pcm=C+Si/30+Mn/20+Cu/20+Ni/60+Cr/20+Mo/15+V/10+5B$. The innovative composition ratio of the invention and the addition of Ni alloying elements can produce an effective strengthening effect and improve the strong plasticity and low temperature toughness of the steel board, as well as reduce copper embrittlement, reduce intergranular cracking in the hot rolling process and improve the corrosion resistance of the steel board.

In the above-mentioned steel board for polar marine engineering, as a preferred embodiment, the components of the steel board in terms of mass percentage are: C: 0.06-0.075%, Si: 0.20-0.28%, Mn: 1.48-1.58%, Nb: 0.020%-0.035%, Ti: 0.013%-0.018%, V: 0.030%- 0.045%, Ni: 0.08%-0.12%, Als: 0.025%-0.040%, P: ≤0.013%, S: ≤0.005%, and the rest are Fe and unavoidable impurities.

In the above-mentioned steel board for polar marine engineering, as a preferred embodiment, the mass percentage content of V and Ni in the components of the steel board satisfy the following relational formula: $0.211C+0.041Mn+0.738Nb+1.19Ti \le V+Ni \le 0.318C+0.065Mn+0.943Nb+1.867 Ti$.

In the above-mentioned steel board for polar marine engineering, as a preferred embodiment, based on the weight of the steel board, the mass percentage content of each component of the unavoidable impurities is: H≤ 0.0002%, O≤0.003%, As≤0.007%, Sb≤0.010%, Sn≤0.020%, Pb≤0.010%, Bi ≤0.010% and Ca≤ 0.005%.

Nb: The element niobium is added to promote the grain refinement of the steel rolling microstructure, which can improve both strength and toughness. Niobium can effectively refine the microstructure by inhibiting austenite recrystallization during the controlled rolling process, and strengthen the matrix by precipitation, so that the Nb-containing steel can be rolled at higher temperatures to obtain a fine grain organization. However, when the Nb content is too high, it will also generate ferrite δ phase or other brittle phases, which will reduce the toughness and deteriorate the hot workability. In the welding process, niobium atomic polarization and precipitation can impede the heating of austenite grain coarsening, and to ensure that the weld to get a relatively small heat-affected zone organization, improve the performance of the welded heat-affected zone. When the Nb content is less than 0.01% on the steel performance effect is small, and more than 0.05%, the steel welding performance and toughness are reduced, in order to control the steel board performance to achieve more desirable results, so the invention will control the Nb content of 0.02% to 0.035%.

Ti: Ti can form carbide, nitride or carbonitride with C and N elements, inhibit the excessive growth of austenite grains during the heating and manufacturing process of the slab, with a better grain refinement effect, improve the low-temperature toughness of the steel board. More importantly, it inhibits the grain growth in the heat-affected zone during welding and improves the toughness of the heat-affected zone, but it is easy to form large particles of TiN and lose the fine crystal effect when it exceeds 0.04%, taking into account the cost of the alloy and the performance of the steel plate, the invention controls the Ti content at 0.01% to 0.02%.

V: it can play a solid solution strengthening role in steel, by generating V(C, N) diffusion precipitation at lower temperature rolling, impede the movement of dislocations, so that there are a large number of dislocations in austenite, promote phase deformation nucleation, refine the final organization, improve the strength and toughness of TMCP steel board, reduce superheat sensitivity, improve thermal stability. If V is added below 0.020%, the precipitated V(C, N) is too little to effectively improve the strength of ultra-high strength steel plate; if V is added above 0.080%, it will damage the low temperature toughness, elongation, welding performance and post-weld stress relief heat treatment (SR) of the steel plate, taking into account the alloy cost and steel plate performance, the invention controls the V content at 0.02%-0.035%.

Ni: it has solid solution strengthening effect, and can promote the formation of stable austenite organization of alloy steel, inhibit austenite recrystallization, refining grain size, so Ni has the function of simultaneously improving the strength, elongation and low-temperature toughness of steel; Ni in steel can also reduce the copper brittleness of copper-containing steel, reduce intergranular cracking in the hot rolling process, and improve the atmospheric corrosion resistance of steel. Therefore, theoretically speaking, the higher the Ni content in the steel within a certain range, the better, but too high Ni content will harden the weld heat affected zone, the weldability of the steel board and post-weld stress relief heat treatment (SR) is not conducive. But enough Ni content to ensure that the steel board has sufficient hardenability, uniform performance in the direction of the plate thickness, while ensuring the plastic toughness of the steel board, so the invention will control the Ni content of 0.08% to 0.17%.

Als: Als in steel can fix the free N in steel and improve the low temperature toughness of steel board and welded HAZ, and the diffuse precipitation of AIN will inhibit the growth of austenite grains during heating, uniformly refine the austenite grain size and improve the impact toughness. Aluminum also has oxidation resistance and corrosion resistance, but too much Al content will lead to an increase in the number of inclusions in steel, inclusions become larger in size, the decline in the internal quality of the steel board, affecting the hot workability of steel, welding properties and cutting properties, so the invention will Als content control at 0.015% to 0.04%.

N: N element content is too high will form coarse TiN, AlN in the original austenite grain boundary precipitation, damage the steel board and welding heat affected zone impact toughness and plasticity. At the same time, N atoms will also be enriched in the steel defects, the formation of porosity and sparse, further deteriorating the mechanical properties of the steel board. Therefore, considering that it is unlikely to remove N from the steel, the N content in the present invention is controlled to $\leq 0.006\%$.

B: too high content will enrich the grain boundaries in the steel board, thus reducing the grain boundary energy and causing the steel board to form low temperature phase change organization during cooling, reducing the low temperature impact properties and fatigue properties of the steel board. Therefore, the amount of B added in the present invention is & 0.0005%.

O: element residual in the cast billet species or diffusion to the surface layer, easy to make the grain boundary oxidation and the formation of brittle oxide interlayer, the austenite grains isolated to cause intergranular cracking in the subsequent deformation process, so that the steel board strength and plasticity significantly reduced, so as far as possible to control the content of O. In order to ensure the plasticity and low-temperature toughness of the steel board, it is necessary to reduce the inclusions in the steel, of which aluminum oxide inclusions are the most harmful, so the steel O content & 0.003%.

H: the presence of hydrogen will produce white spots, so control the content of $H \leq 0.0002\%$.

Ca: Ca treatment of steel, on the one hand, can further purify the steel, on the other hand, can effectively control the inclusions morphology, denaturation of steel sulfide, oxide, so that it becomes non-deformable, stable and fine spherical sulfide, inhibit the thermal embrittlement of S, improve the low temperature toughness, elongation and Z-directional properties of steel board, improve the anisotropy of steel toughness and weldability. Residual Ca content is too high, the formation of Ca (O, S) size is too large, will increase the cluster or bundle inclusions, brittleness also increases, can become a fracture crack initiation point, reduce the steel low temperature toughness, elongation and steel board weldability, but also reduce the steel purity, pollution of the steel, so the Ca content in steel & 0.005 %.

CEV: control the carbon equivalent index is beneficial to protect the strength and weldability of the steel board, the CEV of the invention is controlled at & 0.39%.

Pcm: control of cold crack sensitivity coefficient is beneficial to guarantee the welding performance of the product, the Pcm of the present invention is controlled at $\leq 0.20\%$.

A method for preparing a steel board for polar marine engineering, comprising:

smelting and casting step: primary refining of molten steel and scrap steel to obtain primary molten steel, then the primary molten steel is refined and cast to obtain a cast billet, then the cast billet is slowly cooled;
heating step: heating the cast billet after the slow cooling to obtain a hot cast billet;
rolling step: rolling the hot cast billet to obtain a steel board;
cooling step: cooling the steel board to obtain the steel board for polar marine engineering.

In the above-mentioned steel board for polar marine engineering, as a preferred embodiment, in the smelting and casting step, the primary refining is carried out under top-bottom blowing converter conditions; preferably, prior to the primary refining, the molten steel is desulfurized using KR pretreatment, with the molten steel containing & 0.015 wt. % sulfur after desulfurization

In the above-mentioned steel board for polar marine engineering, as a preferred embodiment, in the smelting and casting step, the scrap/(molten steel + scrap) & 8wt.% (e.g. 5wt.%, 6wt.%, 7wt.%), taking into account that scrap will bring in certain impurity elements; preferably, nickel plate is added with the scrap.

In the above-mentioned steel board for polar marine engineering, as a preferred embodiment, preferably, in the primary refining of the smelting and casting step, the primary refining is carried out using a double slag process, with the final slag alkalinity of the second slag-making smelting controlled at R=3.0 to 4.0, preferably with a single catch carbon, preferably with the slag material added 3-4 mins before the end of the primary refining; the ferro-manganese aluminum is added in forepart of steel tapping phase to deoxidation, and the manganese metal, ferro-niobium, ferro-vanadium and ferrosilicon alloy are added when the primary molten steel is out to one-fourth steel tapping bulkly to three quarters of the time to add finished.

In the above-mentioned steel board for polar marine engineering, as a preferred implementation, in the smelting and casting step, the refining is LF + RH refining; preferably, in the LF refining process, the bottom-blowing argon is adopted in the whole process for stirring, the aluminum particles, calcium carbide are used for deoxidation, the top slag is yellow-white slag or white slag before leaving the station, yellow-white slag or white slag holding time is not less than 10 mins (for example, 11 mins, 13 mins, 15 mins etc.). As titanium is very easy to oxidize, so titanium line is fed at the end of refining, in order to control the desulfurization effect, the final slag alkalinity amount is required to be controlled above 2.5 (e.g. 2.7, 2.9, 3.1 etc.).

In the above-mentioned steel board for polar marine engineering, as a preferred embodiment, in the smelting and casting step, during LF refining, the composition is fine-tuned using manganese metal, ferrosilicon, ferro-niobium and ferro-vanadium alloys.

In the above-mentioned steel board for polar marine engineering, as a preferred embodiment, in the RH refining, the degassing time is not less than 5mins; wherein, in the RH refining, calcium-aluminum wire is fed for calcification treatment to improve the morphology of inclusions and effectively remove inclusions; soft blowing is carried out before leaving the station, and the soft blowing time is not less than 12mins.

In the above-mentioned steel board for polar marine engineering, as a preferred embodiment, in the smelting and casting step, in the casting, the whole protection casting is used, the liquidus temperature is 1515-1525°C (for example, 1517°C, 1519°C, 1521 °C, 1523°C), the superheat requirement is not more than 17°C, the light press down technique is used at the solidification end of the cast billet in the fan section, the cast billet into the pit In order to fully reduce the tissue stress and thermal stress generated by the billet in the cooling process, the steel sheet is slowly cooled by stacking for not less than 60 hours.

In the above-mentioned steel board for polar marine engineering, as a preferred embodiment, in the heating step, the heating rate is greater than 10mins/cm to ensure that the billet burns evenly and thoroughly; the uniform heating time is not less than 40mins; after the billet is heated (out of the heating furnace), the hot cast billet is subjected to high pressure water phosphorus removal.

In the above-mentioned steel board for polar marine engineering, as a preferred embodiment, in the rolling step, the rolling is a two-stage controlled rolling of roughing rolling and finishing rolling, roughing is a recrystallization zone rolling, in order to prevent excessive grain growth, finishing is controlled as an unrecrystallized zone rolling; preferably, an opening rolling temperature of the finishing rolling is controlled at 860-960°C (e.g. 870°C, 890°C, 910°C, 930°C, 950°C), and a final rolling temperature of the finishing rolling is controlled at 820-840°C (e.g. 825°C, 830°C, 835°C).

In the above-mentioned steel board for polar marine engineering, as a preferred embodiment, in the cooling step, when the thickness of the steel board is 6-14mm, the cooling is air cooling.

In the above-mentioned steel board for polar marine engineering, as a preferred embodiment, in the cooling step, when the thickness of the steel board is 14-40mm, the cooling is ACC water cooling, with an inlet water temperature of 770-780°C (e.g. 772°C, 774°C, 776°C, 778°C) and an outlet water temperature of 600-650°C (e.g. 610°C, 620°C, 630°C, 640°C), and the steel board is straightened after the water cooling. The water discharge temperature of the present invention allows for a higher degree of homogenization of the properties of the steel board.

The present invention has the following positive effects compared with the prior art:

(1) The invention adopts the micro alloy composition design with the addition of Nb, V, Ti and Ni, gives full play to the precipitation strengthening effect of Ni alloy elements and the tissue regulation technology of the production process, and obtains a fine and uniformly distributed pearlite + ferrite mixed tissue, which can obtain excellent strength, plasticity and low temperature toughness with less alloy content, which not only further reduces the alloy cost and production cost, improves the steel board welding performance and weld crack sensitivity, correspondingly reducing the cost of processing and fabrication for users. No Cu is added in this application, which will eliminsate or weaken the phenomenon of intergranular cracking in the hot rolling process due to the copper embrittlement phenomenon. Instead, Ni alloy is added, which can improve the strength and toughness through solid solution strengthening and fine grain strengthening effects.

(2) The steel board obtained from the invention has excellent properties: the upper yield strength is above 420MPa; the tensile strength is above 540MPa; the elongation after break is above 21%; the transverse impact work at -40 °C is above 250J; the longitudinal aging impact work at -40 °C is above 250J.

(3) The steel grade is well adapted to the development of marine engineering in the cold zone, with excellent overall performance of high strength, low temperature resistance, easy welding, corrosion resistance, etc., and good low temperature aging impact toughness, thickness direction performance uniformity and batch to batch performance stability, and can serve the needs of the steel board in the cold environment for a long time, providing technical support for the development of steel board products that can be widely used in marine engineering in the cold zone.

(4) This hot-rolled steel board is solid solution strengthened with inexpensive Mn elements, which provides good raw material for casting billets by controlling the composition, purity and gas content in the steelmaking process. Subsequently, two-stage controlled rolling and controlled cooling process is carried out, the rough rolling stage through the large press down to refine the grain, the finishing stage in the unrecrystallized area of controlled rolling can form a large number of dislocations and effectively prevent grain growth, improve performance, through micro-alloying and tissue control technology to further toughen, control the thickness of the steel board in the direction of tissue properties uniformity, to ensure that the steel board in the high strength also has good low temperature toughness. The low-cost 420 MPa grade marine engineering steel board produced by this method has excellent overall performance of high strength, low temperature resistance, easy welding and fatigue resistance under simple composition system, and good control of low temperature aging impact toughness, thickness direction performance uniformity and batch to batch performance stability, which can be used in long-term service under extremely cold environment and can be widely used in various projects in extremely cold zone.

## DETAILED DESCRIPTION OF THE EMBODIMENTS

In order to highlight the purpose, technical solutions and advantages of the present invention, the present invention is further described below in connection with embodiments, examples of which are expressed by way of explanation of the present invention rather than limiting the present invention. The technical solutions of the present invention are not limited to the specific embodiments enumerated below, but also include any combination between the specific embodiments.

Any of the features disclosed in this specification, unless specifically recited, may be replaced by other equivalent or alternative features having a similar purpose. Unless specifically recited, each feature is only one example of a series of equivalent or similar features.

(1) smelting: the molten steel in the converter is desulfurized using KR pretreatment, and using top-bottom combined blowing converter smelting, and then LF + RH refining, the whole process to do a good job of composition, purity and gas content control, continuous casting process using the whole protection casting; casting billet should be off-line stacking or into the slow cooling pit for slow cooling, slow cooling time of not less than 60 hours.

Wherein, the raw materials into the furnace must meet the technical requirements of the converter process, the blast furnace molten molten steel is desulfurized by KR pretreatment, the sulfur content of the incomings molten molten steel is & 0.015%, the desulfurization is completed by picking up the slag on the surface of the molten molten steel, the loading quantity is strictly controlled, the loading quantity error $\pm$ 2 tons. Nickel plate added with scrap, the amount of scrap added shall not exceed 8% of the total loading.

The use of double slag process smelting, the final slag alkalinity control in R = 3.0-4.0, the use of a single catch carbon, slag material in the end before 3mins added. Block slag out of steel, eliminsate a large number of under slag, put the steel time is not less than 3 mins; using ferromanganese aluminum 3.5kg / t steel deoxidation, steel tapping to a quarter of the time, add manganese metal, ferro-niobium, ferro-vanadium, ferrosilicon alloy in batches, steel tapping to three-quarters of the time added.

in the LF refining process, the bottom-blowing argon is adopted in the whole process for stirring, the aluminum particles, calcium carbide are used for the slag adjustment, deoxidation, the entire smelting process shall not be bare steel, to prevent secondary oxidation of steel. Out of the station before the top slag must be yellow-white slag or white slag, yellow-white slag or white slag holding time is not less than 10 mins, because titanium is very easy to oxidation, so titanium line is fed at the end of refining, the final slag alkalinity as much as possible to control above 2.5. The use of manganese metal, ferrosilicon, ferro-niobium, ferro-vanadium, nickel plate and other alloys for composition fine-tuning to ensure that the composition meets the internal control, LF refining time of not less than 45 mins.

RH refining process requires avoiding chemical temperature rise, controlling the purity of the steel and gas content, ensuring that the pure degassing time is not less than 5 mins. feeding calcium-aluminum line for calcification treatment, improving the morphology of inclusions and effectively removing inclusions. soft blowing is carried out before leaving the station, and the soft blowing time shall not be less than 12 mins. preferably, the vacuum degree is 25-65 Pa (e.g. 35 Pa, 40 Pa, 45 Pa, 50 Pa, 55 Pa, etc.).

Through the above steps, It is possible to obtain a target molten steel having a composition consisting of C: 0.06-0.09%, Si: 0.20-0.35%, Mn: 1.48-1.63%, Nb: 0.020%-0.035%, Ti: 0.010%-0.020%, V: 0.020%-0.035%, Ni: 0.08%-0.17%, Al: 0.015% -0.040%, the rest being Fe and unavoidable impurities. However, the present invention is not limited to this, but it is also possible to obtain steel in the above composition range by other means.

In the continuous casting process of the present invention, the whole process is protected casting, the liquidus temperature is calculated as 1515°C according to the middle limit of the intermediate specification composition, the superheat is required to be not more than 17°C (e.g. 14, 15, 16°C), the light press down technique is used at the solidification end of the fan section billet, the billet is pitted and stacked for slow cooling for not less than 60 hours to fully reduce the tissue stress and thermal stress generated by the billet during cooling. The pulling speed of 175mm billet section thickness is controlled as 1.25-1.35m/mins, 200mm billet section thickness is controlled as 1.3-1.4m/mins, 250mm billet section thickness is controlled as 1.1-1.3m/mins, 300mm billet section thickness is controlled as 0.8-0.9m/mins.

2) Heating:

Add the continuous casting billet to the heating furnace for heating, and the casting billet loading method is cold loading.

Wherein, in order to prevent the heating process of alloy elements in the grain boundary bias aggregation caused by micro-cracking of the cast billet, the invention uses the cold loading method to feed the slab into the heating furnace, the heating rate required $\geq$ 10mins/cm calculation, to ensure that the billet burn evenly burn through. The uniform heating time is not less than 40mins, and the temperature difference at each point of the billet is not more than 15°C, and the billet is de-phosphorized with high-pressure water after leaving the heating furnace.

3) Rolling:

The rolling is a two-stage controlled rolling of roughing rolling and finishing rolling, the roughing rolling being a recrystallization zone rolling; an opening rolling temperature of the roughing rolling is preferred to 1185-1200 °C, a final rolling temperature of the roughing rolling is preferred to 1160-1190 °C; in order to prevent excessive grain growth, the finishing rolling being an unrecrystallized zone rolling, an opening rolling temperature of the finishing rolling is controlled in 860 - 960 °C, a final rolling temperature of the finishing rolling is controlled in 820 - 840 °C.

4) Cooling:

Thickness less than 14mm steel board using air-cooling process, the steel board which thickness greater than 14mm being ACC water cooling after rolling, an inlet water temperature of 770 - 780 °C, and an outlet water temperature of 600 - 650 °C, , after water cooling, the steel board is straightened. Finished thickness $\geq$ 25mm steel board water cooling as soon as possible after the pit cooling or stacking slow cooling, slow cooling time of not less than 48 hours.

The chemical composition of each embodiment of the present invention is shown in Table 1; the smelting process parameters of each embodiment of the present invention are shown in Table 2; the rolling process parameters of each embodiment of the present invention are shown in Table 3; the mechanical properties of each embodiment of the present invention are tested according to GB/T 228 and GB/T 2289, as shown in Table 4 and Table 5.

Table 1 Chemical composition of steels of examples 1-3 of the present invention (wt%, the rest is Fe).

| Thickness | C | Si | Mn | P | S | Ni | Nb | V | Ti | Als | N | B | PCM | CEV |
|---|---|---|---|---|---|---|---|---|---|---|---|---|---|---|
| 15mm | 0.071 | 0.23 | 1.53 | 0.01 | 0.001 | 0.09 | 0.032 | 0.023 | 0.016 | 0.03 | 0.0042 | 0.0003 | 0.17 | 0.37 |
| 25mm | 0.065 | 0.24 | 1.5 | 0.01 | 0.003 | 0.09 | 0.021 | 0.021 | 0.017 | 0.038 | 0.0034 | 0.0002 | 0.15 | 0.33 |
| 40mm | 0.07 | 0.25 | 1.51 | 0.01 | 0.005 | 0.1 | 0.022 | 0.022 | 0.015 | 0.038 | 0.0037 | 0.0004 | 0.16 | 0.34 |

Note: CEV=C+Mn/6+(Cr+Mo+V)/5+(Ni+Cu)/15≤0.39%
Pcm=C+Si/30+Mn/20+Cu/20+Ni/60+Cr/20+Mo/15+V/10+5B≤0.20%

V+Ni meets 0.211C+0.041NM+0.738Nb+1.19Ti≤V+Ni≤0.318C+0.065NM +0.943Nb+1.867Ti

Table 2 Smelting process parameters of the steel of examples 1-3 of the present invention

| Specification | Example | LF soft blowing time/min s | RH vacuum degree/P a | RH soft blowing time/min s | RH pure degassing time/min s | Mid pack temperature/ °C | Pulling speed/m/min s | Liquid phase line temperature/ °C | Superheat degree/ °C |
|---|---|---|---|---|---|---|---|---|---|
| 15 mm | 1 | 5 | 50 | 12 | 23 | 1535 | 1.1 | 1520 | 16 |
| 25 mm | 2 | 5 | 60 | 12 | 14 | 1530 | 1.2 | 1520 | 16 |
| 40 mm | 3 | 5 | 30 | 12 | 5 | 1538 | 1.1 | 1521 | 15 |

Table 3 Rolling and cooling process parameters of the steel of examples 1-3 of the present invention

| Specifica tion | Examp le | Steel output tempera ture | Opening rolling temperature of the roughing rolling | Final rolling temperature of the roughing rolling | Opening rolling temperature of the finishing rolling | Final rolling temperature of the finishing rolling | Inlet water temperatur e | Outlet water tempera ture |
|---|---|---|---|---|---|---|---|---|
| 15 mm | 1 | 1198 | 1187 | 1132 | 868 | 829 | 780 | 607 |
| 25 mm | 2 | 1195 | 1186 | 1131 | 866 | 827 | 778 | 615 |
| 40 mm | 3 | 1191 | 1170 | 1118 | 863 | 827 | 779 | 636 |

Table 4 Mechanical properties of steels of examples 1-3 of the present invention

| Specification | Upper yield strength /MPa | Tensile strength /MPa | Elongation after break /% | -40°C transverse impact work /J | | | |
|---|---|---|---|---|---|---|---|
| | | | | Impact work 1 | Impact work 2 | Impact work 3 | Impact work average |
| 15 mm | 468 | 580 | 23 | 311 | 297 | 326 | 311 |
| 25 mm | 556 | 615 | 23.5 | 296 | 300 | 288 | 295 |
| 40 mm | 499 | 590 | 23 | 286 | 296 | 288 | 290 |

The steel board with age impact properties were aged for 1 hour at 5%, 250 ° C. for aging conditions. The impact properties of the aged steel board are shown in Table 5.

Table 5 Aging Impact of Steel of examples 1-3 of the present invention

| Specification | -40 ° C longitudinal impact work / J | | | |
|---|---|---|---|---|
| | Impact work 1 | Impact work 2 | Impact work 3 | Impact work average |
| 15 mm | 279 | 283 | 289 | 283 |
| 25 mm | 295 | 285 | 283 | 289 |
| 40 mm | 295 | 299 | 285 | 293 |

In summary, the steel board for polar marine engineering of the present invention has excellent comprehensive performance of high strength, low temperature resistance, easy welding, fatigue resistance, etc., good low temperature aging impact toughness, thickness direction performance uniformity and batch-to-batch performance stability, and Z-directional performance (i.e., section shrinkage in thickness direction when tensile) are greater than 40%; and relatively low cost, simple process and easy operation. The high-strength low-temperature resistant marine engineering steel of the present invention is suitable for application in extremely cold climate and high comprehensive performance requirements.

The process parameters of the present invention (such as temperature, time, etc.) interval upper and lower limit taking values as well as interval values can realize the present method, and the examples of implementation are not listed here.

Anything not described in detail in the present invention can be adopted from the conventional technical knowledge in the field.

Finally, it should be noted that the above embodiments are used only to illustrate the technical solutions of the present invention and not to limit them. Although the invention is described in detail with reference to the embodiments, a person of ordinary skill in the art should understand that any modification or equivalent replacement of the technical solution of the invention does not depart from the spirit and scope of the technical solution of the invention, which should be covered by the scope of the claims of the invention.

**Claims**

1. A steel board for polar marine engineering, **characterized in that**, the components of the steel board in terms of mass percentage are: C: 0.06-0.09%, Si: 0.20-0.35%, Mn: 1.48-1.63%, Nb: 0.020%-0.035%, Ti: 0.010%-0.020%, V: 0.020%-0.035%, Ni. 0.08%-0.17%, Als: 0.015%-0.040%, P: ≤0.013%, S: ≤ 0.005%, N: ≤ 0.006%, B: ≤ 0.005%, the rest are Fe and unavoidable impurities; and CEV≤0.39%, Pcm≤0.20%, where in:

$$CEV=C+Mn/6+(Cr+Mo+V)/5+(Ni+Cu)/15,$$

$$Pcm=C+Si/30+Mn/20+Cu/20+Ni/60+Cr/20+Mo/15+V/10+5B \leqslant 0.20\%.$$

2. The steel board for polar marine engineering according to claim 1, **characterized in that** the components of the steel board in terms of mass percentage are: C: 0.06-0.075%, Si: 0.20-0.28%, Mn: 1.48-1.58%, Nb: 0.020%-0.035%, Ti: 0.013%-0.018%, V: 0.030%- 0.045%, Ni: 0.08%- 0.12%, Als: 0.025% - 0.040%, P: & 0.013%, S: & 0.005%, the rest are Fe and unavoidable impurities;
preferably, the mass percentage content of V and Ni in the components of the steel board satisfy the following relationship formula: $0.211C+0.041Mn+0.738Nb+1.19Ti \leq V+Ni \leq 0.318C+0.065Mn+0.943Nb+1.867 Ti$.

3. The steel board for polar marine engineering according to claim 1 or 2, **characterized in that**, based on the weight of the steel board, the mass percentage content of each component of the unavoidable impurities is: H≤0.0002%, O≤ 0.003%, As≤0.007%, Sb≤0.010%, Sn≤0.020%, Pb≤0.010%, Bi≤0.010% and Ca≤ 0.005%.

4. A method for preparing a steel board for polar marine engineering according to any one of claims 1-3, **characterized in that**, comprising:

   a smelting and casting step: primary refining of molten steel and scrap to obtain a primary molten steel, then the primary molten steel is refined and cast to obtain a cast billet, then the cast billet is slowly cooled;
   heating step: heating the cast billet after the slow cooling to obtain a hot cast billet;
   rolling step: rolling the hot cast billet to obtain a steel board;
   cooling step: cooling the steel board to obtain the steel board for polar marine engineering.

5. The method for preparing steel board for polar marine engineering according to claim 4, **characterized in that**, in the smelting and casting step, the primary refining is carried out under top-bottom combined blowing converter conditions; preferably, prior to the primary refining, the molten steel is desulfurized using KR pretreatment, with the molten steel containing & 0.015 wt. % sulfur after desulfurization;

   preferably, the scrap/(molten steel + scrap) & 8wt.%; more preferably, nickel plate is added with the scrap;
   preferably, in the primary refining of the smelting and casting step, the primary refining is carried out using a double slag process, with the final slag alkalinity of the second slag-making smelting controlled at R=3.0- 4.0, preferably with a single catch carbon, preferably with the slag material added 3-4 mins before the end of the primary refining; the ferro-manganese aluminum is added in forepart of steel tapping phase to deoxidation, and the manganese metal, ferro-niobium, ferro-vanadium and ferrosilicon alloy are added when the primary molten steel is out to one-fourth steel tapping to three quarters of the time to add finished.

6. The method for preparing steel board for polar marine engineering according to claim 4 or 5, **characterized in that**,

   in the smelting and casting step, the refining is LF+RH refining;
   preferably, in the LF refining process, the bottom-blowing argon is adopted in the whole process for stirring, the aluminum particles, calcium carbide are used for deoxidation, the top slag before leaving the station is yellow-white slag or white slag, yellow-white slag or white slag holding time is not less than 10 mins; preferably, titanium line is fed at the end of the refining, the final slag alkalinity amount is controlled above 2.5;
   preferably, during the LF refining process, the composition is fine-tuned using metallic manganese, ferrosilicon, ferro-niobium and ferro-vanadium alloys;
   preferably, in the RH refining, the degassing time is not less than 5 mins; wherein, in the RH refining, the calcium-aluminum line is fed for calcification; soft blowing is carried out before leaving the station, and the soft blowing time shall not be less than 12mins.

7. The method for preparing steel board for polar marine engineering according to claim 4 or 5, **characterized in that**, in the casting, the whole process is protected casting, the liquidus temperature is 1515-1525°C, the superheat is required to be not more than 17°C, the light press down technique is used at the solidification end of the cast billet in the sector section, and the cast billet is slowly cooled in the pit and stack for not less than 60 hours.

8. The method for preparing steel board for polar marine engineering according to claim 4 or 5, **characterized in that**, in the heating step, the heating rate is greater than 10 mins/cm and the uniform heat time is not less than 40 mins; after heating of the cast billet, the hot cast billet is subjected to high pressure water phosphorus removal.

9. The method of preparing steel board for polar marine engineering according to claim 4 or 5, **characterized in that** in the rolling step, the rolling is a two-stage controlled rolling of roughing rolling and finishing rolling, the roughing rolling being a recrystallization zone rolling and the finishing rolling being an unrecrystallized zone rolling; preferably, an opening rolling temperature of the finishing rolling is 860 to 960°C and a final rolling temperature of the finishing rolling is 820 - 840°C.

10. The method for preparing steel board for polar marine engineering according to claim 4 or 5, **characterized in that** in the cooling step, the cooling is air cooling when the thickness of the steel board is 6-14mm;
preferably, when the thickness of the steel board is 14-40mm, the cooling is ACC water cooling with an inlet water temperature of 770-780°C and an outlet water temperature of 600-650°C, after water cooling, the steel board is straightened.

## INTERNATIONAL SEARCH REPORT

| International application No. |
| --- |
| **PCT/CN2021/098735** |

**A. CLASSIFICATION OF SUBJECT MATTER**

C22C 38/02(2006.01)i; C22C 38/04(2006.01)i; C22C 38/12(2006.01)i; C21D 8/02(2006.01)i

According to International Patent Classification (IPC) or to both national classification and IPC

**B. FIELDS SEARCHED**

Minimum documentation searched (classification system followed by classification symbols)

C22C38/-; C21D8/-;

Documentation searched other than minimum documentation to the extent that such documents are included in the fields searched

Electronic data base consulted during the international search (name of data base and, where practicable, search terms used)

CNABS; CNTXT; VEN; STN; EPTXT; USTXT; 海洋工程, 海洋, 钢, Nb, 铌, Niobium, Ti, 钛, Titanium, 莱芜钢铁集团, V, 钒, Vanadium, Ni, 镍, nickel, Al, 铝, Aluminium, 碳当量, CEV, CEq, Pcm, 冷裂纹敏感系数, 焊接, 可焊, 控轧控冷, 粗轧, 精轧, 再结晶区, 未再结晶区, ACC

**C. DOCUMENTS CONSIDERED TO BE RELEVANT**

| Category* | Citation of document, with indication, where appropriate, of the relevant passages | Relevant to claim No. |
| --- | --- | --- |
| X | CN 105369132 A (HUNAN VALIN XIANGTAN IRON AND STEEL CO., LTD.) 02 March 2016 (2016-03-02)<br>description, paragraphs 5-12 | 1-10 |
| X | CN 111455271 A (NANJING IRON & STEEL CO., LTD.) 28 July 2020 (2020-07-28)<br>description, paragraph 5 | 1-3 |
| Y | CN 103436784 A (JIGANG GROUP CO., LTD.) 11 December 2013 (2013-12-11)<br>description, paragraphs 7 and 8 | 1-10 |
| Y | CN 101358320 A (SHOUGANG GENERAL CORP.; QINHUANGDAO SHOUQIN METAL LIMITED COMPANY) 04 February 2009 (2009-02-04)<br>description, page 2 | 1-10 |
| Y | CN 106834944 A (SHANDONG IRON AND STEEL CO., LTD.) 13 June 2017 (2017-06-13)<br>description, paragraphs [0008], [0009] and [0018] | 1-10 |
| A | CN 102534383 A (SHOUGANG CORPORATION) 04 July 2012 (2012-07-04)<br>entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 July 2021** | **30 August 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/098735** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105239003 A (SHANDONG IRON AND STEEL CO., LTD.) 13 January 2016 (2016-01-13)<br>    entire document | 1-10 |
| A | JP 2002180132 A (NIPPON KOKAN K. K.) 26 June 2002 (2002-06-26)<br>    entire document | 1-10 |
| A | CN 110964978 A (SHANDONG IRON AND STEEL CO., LTD.) 07 April 2020 (2020-04-07)<br>    entire document | 1-10 |
| A | JP 04154911 A (SUMITOMO METAL INDUSTRIES, LTD.) 27 May 1992 (1992-05-27)<br>    entire document | 1-10 |

Form PCT/ISA/210 (second sheet) (January 2015)

## INTERNATIONAL SEARCH REPORT
### Information on patent family members

International application No.

**PCT/CN2021/098735**

| Patent document cited in search report | | | Publication date (day/month/year) | Patent family member(s) | | | Publication date (day/month/year) |
|---|---|---|---|---|---|---|---|
| CN | 105369132 | A | 02 March 2016 | None | | | |
| CN | 111455271 | A | 28 July 2020 | None | | | |
| CN | 103436784 | A | 11 December 2013 | CN | 103436784 | B | 17 June 2015 |
| CN | 101358320 | A | 04 February 2009 | CN | 101358320 | B | 13 July 2011 |
| CN | 106834944 | A | 13 June 2017 | None | | | |
| CN | 102534383 | A | 04 July 2012 | CN | 102534383 | B | 27 November 2013 |
| CN | 105239003 | A | 13 January 2016 | None | | | |
| JP | 2002180132 | A | 26 June 2002 | None | | | |
| CN | 110964978 | A | 07 April 2020 | None | | | |
| JP | 04154911 | A | 27 May 1992 | None | | | |

Form PCT/ISA/210 (patent family annex) (January 2015)

**EP 4 198 158 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102851611 B
- CN 103060715 B
- CN 108728743 B
- CN 104674117 A